Europäisches Patentamt

European Patent Office

Office européen des brevets

(19)

(11) Publication number: **0 109 987**
**A1**

(12) **EUROPEAN PATENT APPLICATION**

(21) Application number: **82306253.4**

(22) Date of filing: **24.11.82**

(51) Int. Cl.³: **A 23 N 15/08**

(43) Date of publication of application: **13.06.84**
**Bulletin 84/24**

(84) Designated Contracting States: **DE FR GB**

(71) Applicant: **M.G.I. Co., Ltd., No. 3947 Ikebe-cho Midori-ku, Yokohama-shi Kanagawa-ken (JP)**

(72) Inventor: **Toyosato, Kaku, No. 2569 Kawawa-cho Midori-ku, Yokohama-shi Kanagawa-ken (JP)**

(74) Representative: **Webb, Frederick Ronald et al, G.F. Redfern & Co. Marlborough Lodge 14 Farncombe Road, Worthing West Sussex BN11 2BT (GB)**

(54) **Apparatus for peeling bulbs.**

(57) According to the invention, a bulb peeling apparatus comprises means (23) for incising grooves in the outer peripheral surface skins of bulbs (3) whilst rotating the bulbs (3), the incising means (23) being arranged in the conveying path of a bulb conveying means, and being followed by a compressed air blowing means (30) acting to peel off the incised outer skins.

EP 0 109 987 A1

- 1 -

"APPARATUS FOR PEELING BULBS"

This invention relates to a bulb peeling apparatus in which incised grooves are formed on the outer peripheral surface skins of bulbs while the bulbs are rotated and jets of air are then directed onto the bulbs to peel off the surface skins.

Bulbs such as onions and garlic are generally favoured as cooking materials. However, when they have to be finely cut for particular uses, their surface skins have to be peeled off. When a large number of bulbs have to be treated, manual work will produce a positive result, but will be both lengthy and toilsome, so that costs will inevitably rise. A mechanical peeling means will therefore naturally have to be resorted to.

As a means of peeling off the surface skins of bulbs, it has been found to be most effective to use jets of compressed air. In the peeling process in apparatus provided with such peeling means, bulbs such as, for example, onions; supported and conveyed on a conveying means have jets of compressed air directed onto them to peel off the surface skins. They may then be finely cut in a finely cutting step, and have further jets of air applied to them to separate them for use as cooking material.

However, when compressed air is thus only blown against the outer peripheral surface skins of the bulbs without making incised grooves therein, various defects are likely to occur.

When compressed air is blown onto such bulbs as onions to peel off the surface skins, unless the nozzles are positioned at the correct distance above the onion bulb, the bulbs will not be positively peeled.

An apparatus is already known in which the distance between the air nozzle and the bulbs can be stepwise adjusted in dependence on the size of the bulbs, which have been divided up according to size. However, where a large volume of bulbs is to be treated, it is very difficult to set the nozzles in the proper position for peeling and the peeling apparatus will have a low reliability.

In another known apparatus, therefore, incisions or incised grooves are formed on the outer peripheral surface skins of onions with blades located at the periphery of a hole through which the onions are passed and compressed air is then blown onto them. However, in this known apparatus, unless the sizes of the respective onions are properly arranged, the onions cannot be peeled efficiently and the apparatus is not adapted to treat a large volume of bulbs.

In another known apparatus disclosed in the Japanese Utility Model Gazette as Laid Open Specification No. 104395/1981, in which a large volume of onions can be peeled, onions conveyed by a belt conveyor contact the belt conveyor, usually at the root sides. However after they are conveyed, when incised grooves are formed with first and second rotary cutter devices, the respective onions do not rotate smoothly and the incised grooves are not formed over the whole of the outer peripheries of the onions, but are formed only in the same specific places or locally on the onions. The onions will therefore not be positively peeled and the apparatus has a

0109987

- 3 -

low reliability.

In another known apparatus disclosed in the Japanese Utility Model Gazette as Laid Open Specification No. 104396/1981, grooves to contain onions are helically provided on the peripheral surface of a cylindrical net and blades are arranged inside these grooves so as to form incised grooves. However, it is difficult to vary the heights of the blades for different thicknesses of the surface skins of the onions and the speed of peeling a large volume of onions cannot be considered adequate.

It is therefore an object of the present invention to provide a bulb peeling apparatus in which the surface skins of bulbs can be positively peeled off within a short time, i.e. at a high speed, and which can be used to peel off the surface skins of a large quantity of bulbs.

According to the invention, there is provided apparatus for peeling off the surface skins of bulbs by the action of jets of compressed air, characterised by comprising means for conveying the bulbs at a speed which can be variably set, means for forming incised grooves in the outer peripheries of the bulbs while contacting and rotating the bulbs in the course of their conveyance by said conveying means and means for peeling off the surface skins of the bulbs by directing jets of air onto the bulbs which have had the incised grooves formed in the outer peripheries.

The means for forming incised grooves in the outer peripheries of the bulbs may comprise disc-shaped rotary saws having blades extending at their cutting edges or tips from the outer peripheries thereof.

Conveniently the rotary saws are so formed that a plurality of rotary saws having different projecting blade tips may be removably mounted on one mounting plate, different rotary saws being made available by rotation of the plate.

The means for peeling off the surface skins of the bulbs using air jets may be so formed as to be capable of being set at varying distances from the bulbs, and, if desired, also of being reciprocated.

The conveying means may comprise a plurality of rollers which convey the bulbs along a set path whilst causing the individual bulbs to rotate about an axis connecting the root and stem of the bulb.

The invention will now be further described with reference to the drawings, in which :-

Figure 1 is a schematic general side view showing one embodiment partly in section;

Figure 2 is an explanatory side view to illustrate a driving system for use in the embodiment of Figure 1;

Figure 3 is a schematic end view of part of the embodiment of Figure 1 on an enlarged scale, to illustrate the construction of a roller section;

Figure 4 is a schematic sectional end view of part of the apparatus shown in Figure 3 on a yet more enlarged scale;

Figure 5 is a schematic end view of a part of the embodiment of Figure 1, to illustrate the construction of a jetting section;

Figure 6 is a side sectional view of an air nozzle for use in the embodiment of Figure 1.

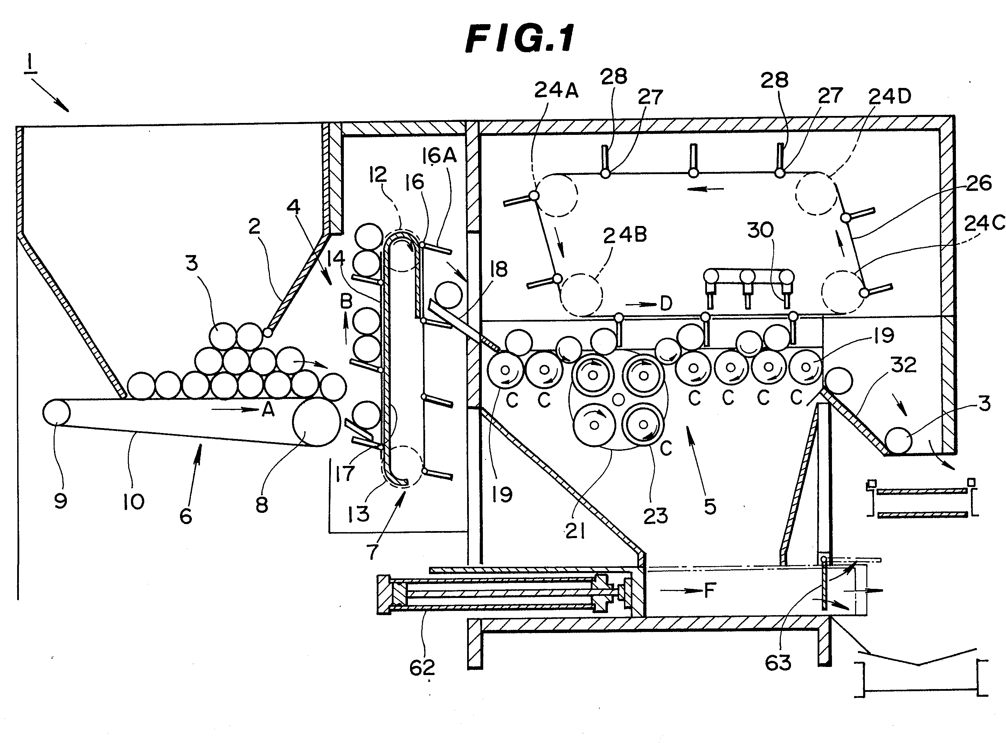

As shown in Figure 1, one form of bulb peeling apparatus according to the invention comprises a funnel-shaped hopper 2 opening at the bottom to provide an inlet port for bulbs (which will be referred to as onions hereinafter), a conveying section 4 for conveying onions 3 from the bottom side of the hopper 2 at an appropriate speed and in an appropriate number, and a peeling section 5 in which slit-shaped incisions or incised grooves are made with rotary blades in the outer peripheral surface skins of the onions 3 while they are being conveyed forward in turn whilst being rotated, and the grooved surface skins of the onions 3 are peeled off by blowing with compressed air.

The hopper 2 is made, for example, of steel and is painted internally three times with a paint which is harmless to foods such as, for example, Sun First E.

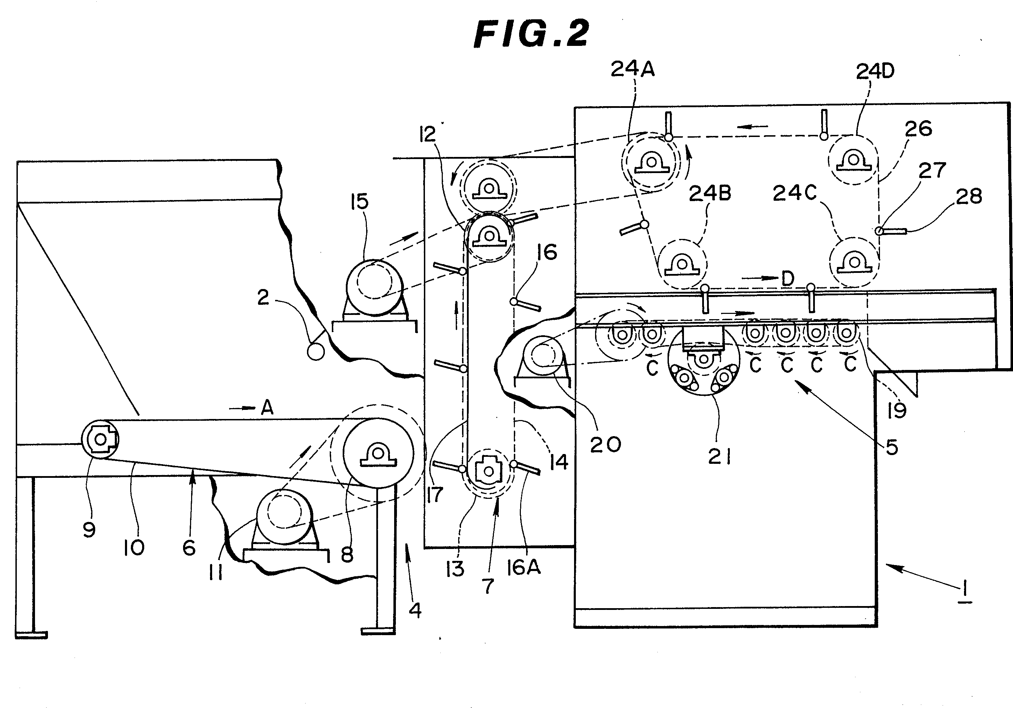

The conveying section 4 comprises a first horizontal conveying part 6 extending in the horizontal direction, and a second vertical conveying part 7 extending in the vertical direction. In the horizontal conveying part 6, a belt 10 is carried substantially horizontally on pulleys 8 and 9 on both sides (only one side being illustrated) respectively at the front and the rear of the bottom opening of the hopper 2, to form a belt conveyor in which one pulley 8 is rotatably driven by a motor 11 as shown in Figure 2, so that the individual onions 3 on the upper side of the belt 10 are conveyed forward (to the right in Figure 1) as shown by the arrow A and are fed to the vertical conveying part 7 which is provided immediately in front of the pulley 8.  In this case, the conveying of the onions 3 can be varied by adjusting the stopping time and operating time of the motor 11 by means of an operating timer (not illustrated).

A belt material suitable for use with foodstuffs is, of course, used for the belt 10.

In the vertical conveying part 7, a roller chain 14 (roller chains 14 are provided on both sides in the direction vertical to the paper surface, but only one of them is shown in Figure 1), is carried on sprockets 12 and 13 respectively at the upper and lower ends, so that, when the upper sprocket 12 is rotatably driven by a motor 15, for example, as shown in Figure 2, the roller chain 14 will convey the onions.  A plurality of bars 16 are provided at predetermined intervals (along the roller chains 14) extending between the roller chains 14 on the two sides. A plurality of comb-shaped pawls 16A serving the role of shelves to carry the onions are fitted to the respective lateral bars 16.  When the roller chain 14 is fed at a predetermined speed vertically upwards, as shown by the arrow B, the angle made by each pawl 16A with the direction of feeding will be somewhat less than a right angle so that, even if too many onions are carried at first, as they are conveyed upwards they will drop off and a fixed amount of onions 3 will be conveyed at a predetermined speed.  A net 17 or the like is provided to prevent the onions 3 from dropping inside the roller chain.  The conveying speed of the roller chain 14 is arranged to be continuously variable.

In the vertical conveying part 7, the upwardly conveyed onions 3, after passing around the outer periphery of the upper side of the sprocket 12, are conveyed downwardly into the front of the peeling section 5 by rolling from the shelves 16A down a sloping plate 18. This plate 18 is also comb-shaped similar to the pawls 16A at its rear portion, so that the teeth of the respective pawls 16A may pass through the rear portion of the plate 18 without hitting it. In the peeling portion 5, a plurality of rollers 19 are provided to form a roller conveyor on which the onions are supported, before and after rotary saws 23 which are removably fitted to a mounting plate 21. The rotary saws 23 are in the form of rollers, at the peripheries of which, the the tips of circular blades 22 project slightly, as shown in Figure 1. The rollers 19 are rotated as shown by the arrows C and are driven by a motor 20, as shown in Figure 2.

In the upper part of the peeling section 5, a roller chain 26 is carried on sprockets 24A, 24B, 24C and 24D arranged at the four corners of a parallelogram at each side, the sprocket 24A being rotatably driven, for example, by means of the motor 15, shown in Figure 2, so that the roller chain 26 is driven in the direction of the arrow D.

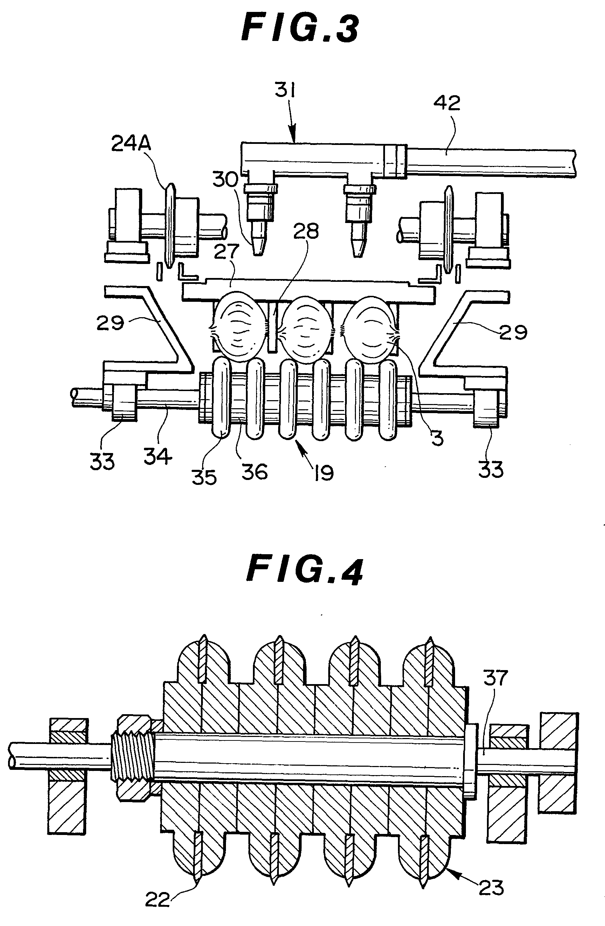

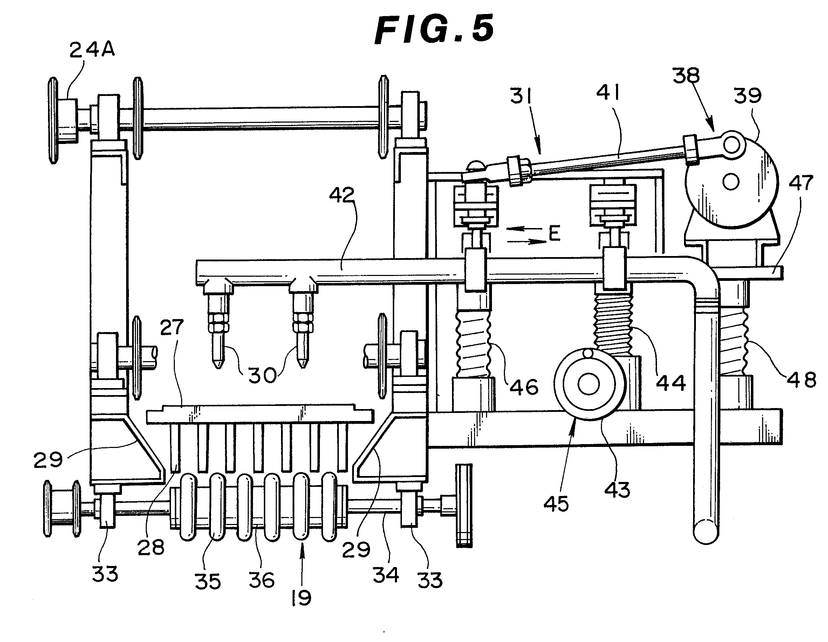

On the roller chain 26, as on the roller chain 14 in the previously-described vertical conveying part 7, a plurality of comb-shaped pawls 28 are provided projecting from lateral bars 27 (see Figures 3 and 5) and there is thus formed a conveying regulating means, by means of which, when the respective pawls 28 are fed at a predetermined speed together with the roller chain 26, in the horizontal part of the belt extending between the sprockets 24B and 24C, the onions 3 supported on the rollers 19 or the rotary saws 23 a little below the roller chain 26 are rotated (in the direction opposite to the direction of rotation of the rollers 19), and are conveyed forward as indicated by the arrow D, at a set conveying speed (carrying speed) as in batches held between adjacent lateral bars 27 in the forward and rearward direction. The conveying speed is set in response to the speed at which the onions are fed in from the vertical conveying part 7. The onions 3 which are conveyed from the rear by adjacent pawls 28 so as to be formed into batches at predetermined intervals in the forward and rearward direction are controlled by the conveying speed so as not to advance too much, or it may act as a stop by means of which, when the onions are rotated in contact with the rollers 19, they will be retained within a set range.

The pawls 28 may be moulded, for example, from polyurethane resin. Guides 29 (see Figures 3 and 5) are provided on either side of the pawls 28, so as to project inwardly towards the pawls and thus to prevent onions from dropping on either side of the pawl ends.

The peeling section 5 also comprises an air jet-directing part 31 provided with a plurality of air nozzles 30 for blowing jets of compressed air. The jet-directing part 31 is arranged above the rollers 19 downstream of the rotary saws 23 in the direction of movement of the onions, and its vertical position can be varied in a continuous manner as hereinafter described. It can also be

0109987

- 9 -

reciprocated to the right or left at right angles to the forward and rearward direction at a set height. By the action of the jets, the surface skins of the onions which have been provided with incisions therein will be blown off downwardly and the onions having had the surface skins thus peeled off, can be conveyed to the next step by way of a plate 32 leading to an outlet. As shown in Figure 3, the roller 19 is provided with a bore through which passes a shaft 34 rotatably supported in bearings 33 arranged on either side of the forward and rearward direction which lies at right angles to the surface of the paper, and is formed by disc-shaped members 35 and annular intermediate members 36. The members 35 are moulded to have a rounded outer periphery, for example, with a predetermined radius of curvature. The annular intermediate members 36 have an outer diameter which is smaller than that of the disc-shaped members 35 and have a fixed thickness, so that the onions 3 in frictional contact with the rounded outer peripheral surfaces of the disc-shaped members projecting above the intermediate members 36 will be rotated in the direction opposite to the direction of rotation of the rollers 19. As the projecting disc-shaped members 35 of adjacent rollers 19 in the forward and rearward direction are arranged in the forward and rearward direction, almost all the onions 3 will rotate around the axis connecting the root end and stem end of the onion in contact with the disc-shaped members 35 projecting to the right and left thereof, as shown in Figure 3, and the rotation will be stably transmitted to the adjacent rollers 19 in the forward and rearward direction or to the side of the rotary saws 23, where the blades 22 are arranged to project at the sides of the intermediate members which correspond to recesses in the adjacent rollers 19. The speed of rotation of the rollers 19 or the rotary saws 23 is made higher than the speed of movement of the pawls 28. The rollers 19 may also be moulded, for example, from polyurethane resin.

As shown in Figure 4, the rotary saws 23 have a large fitting hole formed in the centre thereof and the blades 22 adapted to make slit-shaped incised grooves or incisions in the outer peripheral surface skins of the onions in contact with the outer peripheries of the discs when the rotary saws are rotatably driven, are each inserted between two parts of each thick disc-shaped holding member, and are fixed so that only the tip of the blade 22 projects at the outer peripheries and are fitted as overlapped at fixed intervals equal to those in the case of the rollers 19 on a shaft 37 rotatably supported in bearings arranged on either side, at right angles to the forward and rearward direction in the same manner as in the case of the rollers 19. In the embodiment illustrated, four of such rotary saws 23 are fitted to the mounting plate 21, as shown in Figure 1, and the uppermost two are used to form slit-shaped incisions in the onions 3. By rotating the mounting plate 21 through 90 degrees at a time, the other rotary saws 23 can be used as they are rotated to the upper side and, by removing the fixing nut or other fixing means at the end, the rotary saws 23 can be replaced by other rotary saws 23 different as regards the projecting tips of the blades 22.

By fitting rotary saws 23 of such different projections of the tips of the blades 22 as, for example, 0.5, 0.95 and 1 mm. to the mounting plate 21, the incising depth can be varied in accordance with the size of the onions 3, by rotating the plate.

The blades 22 arranged at fixed intervals in the rightward and leftward direction can be arranged to have different intervals between adjacent blade tips.

The above mentioned blades 22 are, in this embodiment, moulded from ceramics formed by sintering 95% $Al_2O_3$, 3% $SiO_2$, 0.5% CaO, 0.5% $Fe_2O_3$, 0.5% Si and 0.5% of others. (Needless to say, any other suitable ceramic, or a suitable metal, may equally be used.) The holding members holding the blades 22 are made of "Teflon" or "Delrin".

The jet-directing part 31 for blowing compressed air over the onions which have been incised on the outer peripheral surface skins by the rotary saws 23, in order to blow off the surface skins is formed as shown in Figure 5.

The rotary motion of a motor 39 is converted to the reciprocating motion of a connecting rod 41 by means of a cam mechanism 38. This connecting rod 41 is loosely connected at its tip (the left-hand end in Figure 5) to the substantially central part of a pipe member 42 into which compressed air can be passed. This pipe member 42 is thus reciprocated in the rightward and leftward direction (which is the direction extending transversely at both sides of the forward and rearward direction in which the onions 3 are conveyed) as indicated by the arrows E. Jets of compressed air are projected downwards from air nozzles 30 arranged to project in, for example, six places on the lower side of the periphery of the tip part of the pipe member 42. (Two air nozzles not illustrated are provided respectively on either side of the plane of the air nozzles 30 in the paper surface). An elevating mechanism is provided to make it possible to adjust the height (that is, the vertical distance from the onions) of the pipe member 42 fitted with the nozzles 30 at its tip in a continuous manner.

For this purpose, as shown in Figure 5, a screw jack 45 (which may alternatively be a rack-driving jack using a rack, or a hydraulic jack) is provided for continuously varying the height of the horizontal part of the pipe member 42 by elevating or lowering it at the part somewhat on the right-hand side of the middle part. The jack comprises an elevating screw 44 meshing with a screw fixed to or formed in a central shaft of a rotary handle 43. In order that the horizontal part of the pipe member 42 may not tilt when the pipe member 42 is elevated or lowered in a continuous manner, the pipe member 42 at the position at which the tip of the connecting rod 41 is connected thereto, is supported at its lower side by a bellows-shaped member 46 guided by an internal member and movable in the vertical direction on the outer periphery of the inside member. In the same way, a supporting base 47 in the cam mechanism 38 is also supported by a bellows-shaped member 48 having the same function.

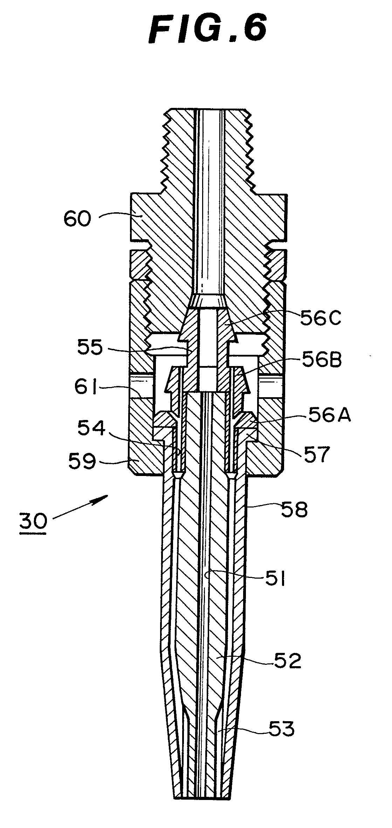

The air nozzle 30 is formed as shown in Figure 6.

The air nozzle comprises an inner tube 52 in which a central through bore 51 is provided to serve as a path for compressed air. The base and tip ends of the inner tube 52 are of reduced outer diameter. A plurality of fine vertical grooves 53 are formed in the axial direction on the outer periphery of the tip of the inner tube 52 so that air is sucked in at the outer peripheral side of the inner tube 52 by the compressed air flow delivered from the outlet of the bore 51 at the tip, and passes through the grooves 53 so as to cover the outer periphery of the compressed air flow.

The inner tube 52 is fixed at its base end by being pressed into or otherwise fixed in an opening in the front end of an air-suction member 55 provided with an internal bore communicating with the through bore 51, and also provided with air suction holes 54 in a plurality of places around the central bore. The air-suction member 55 has flanges 56A, 56B and 56C formed in three places by incising the outer periphery of a cylindrical member, the flanges having increasingly smaller outer diameters towards the rear of the nozzle. The flange 56A having the largest outer diameter is formed to have an outer diameter equal to that of an external flange 57 on the end of an outer tube 58 having an inner diameter such as to surround and be spaced from the inner tube 52.

The holes 54 provided in the air-suction member 55 are branched so as to open at the rear end

- 14 -

surface of the flange 56A and the rear end surface of the flange 56B, so as to suck in air around the outer periphery of the flange 56B.

The inner tube 52 and the outer tube 58 are held in position by screwing a tubular fixing member 59 to a fitting member 60 provided with a central bore. A plurality of holes 61 are formed in the outer peripheral wall of the member 59 near the middle thereof and the air gap at the outer periphery of the flange 56B is arranged to communicate with the inner ends of the holes 61, to provide the air which is sucked into the holes 54 from ends located at the rear end surfaces of the flanges 56A and 56B. The air sucked in through the holes 54 is led to the vertical grooves 53 through the space between the outer periphery of the inner tube 52 and the inner periphery of the outer tube 58.

A female screw thread is formed on the inner periphery of the rear end of the fixing member 59 and into this is screwed a male screw thread formed on the outer periphery of the front end of the fitting member 60 so as to removably fix together the members 59 and 60. A male screw thread formed on the outer periphery at the rear end of the fitting member 60 can, moreover, be screwed into a correspondingly threaded hole in the pipe member 42. The compressed air fed through the pipe member 42 will thus be led to the through bore 51 of the inner tube 52 through the bore in the fitting member 60 and further through the bore in the air-suction member 55, the flange 56C at the rear end of which fits into the bore of the fitting member 60, thus forming a flow path for compressed air to be delivered from the tip orifice of the through bore 51. The compressed air is fed along this path. In order to prevent the compressed air delivered from the nozzle from being gradually expanded by the resistance of (substantially stationary) surrounding air and thus being quickly reduced in speed, an air flow path is formed around the periphery of the compressed air flow path, so that a curtain of air sucked in by the compressed air flow is formed around the jet of compressed air, and this jet can be delivered from the nozzle without being substantially effected by the resistance of the stationary air. In other words, a jetting means is provided whereby a jet of compressed air is delivered strongly in a forward direction without being appreciably subjected to the resistance of the surrounding air.

Below the rollers 19 there is provided a waste box to receive the peeled-off surface skins of the onions 3. A sliding member 62 is provided at the rear end of the waste box, so that when this member 62 is moved forward as indicated by the arrow F, it will slide to the forward position indicated by the chain-dotted lines and will push up and open a pivotally mounted flap 63 which normally closes a discharge port at the front end of the waste box, so that the surface skins can be discharged.

The above-described apparatus is all contained in a box-shaped container so as to reduce the noise of the motors 11 and 15 and to prevent dust and the like from being introduced into the apparatus.

In the above-described embodiment, the metal members consist of steel provided with a plurality of coats of paint.

The operation of the embodiment of the invention just described will now be explained.

When a plurality of onions 3 put into the hopper 2 are conveyed forward in the horizontal direction carried on the belt 10 in the horizontal conveying part 6, and are further conveyed upwards at a set conveying speed carried on the pawls 16A in the vertical conveying part 7 and are then conveyed into the peeling part 5 over the plate 18, the onions 3 conveyed into the peeling part 5 will contact the rollers 19 rotatably driven as indicated by the arrows C and will themselves be rotated in the opposite direction by friction with the contacted rollers 19. These rotating onions 3 will be conveyed forward as indicated by the arrow D at a pre-determined speed and separated into batches of predetermined intervals by the pawls 28 projecting from the lateral bars 27 provided between the roller chains 26 at the upper side of the rollers 19. As the rotary saws 23 are arranged in the course of the roller conveyor formed by the rollers 19, the surface skins of the onions 3 conveyed while being rotated by the rollers 19 will be incised by contact with the tips of the blades 22 projecting from the outer peripheries of the rotary saws 23, while the onions will be rotated in the direction opposite to that of the rotary saws in the same way as by the rollers 19, by friction with the holding members adjacent to the tips of the blades 22, and therefore incisions will be made over the outer peripheries of the surface skins.

The thus incised onions 3 are conveyed in turn to the rollers 19 arranged downstream of the blades 22, where the surface skins are peeled off downwards by jets of compressed air delivered from the air nozzles 30. In this case, as incisions have been made in the outer peripheries of the onions 3, the jetted air will enter the insides of the surface skins through the incisions, the surface skins will be separated or become easy to separate and therefore (without the need of directing air jets toward specific positions on the stem sides of the onions 3) only by directing air jets against the outer peripheries of the onions 3, the surface skins can be positively blown off, or peeled off. In this case, as the onions 3 are being rotated, the peeling can be effected more effectively than in the case of conveying the onions without rotating them. Moreover, as the peeling time can be reduced, a large volume of onions can be peeled at a high speed and thus within a short time.

Since the air nozzles 30 of the embodiment illustrated are such that the compressed air jets leaving the nozzles 30 will not become so weak as to suck in surrounding air, the peeling can be made at a higher speed and more positively.

The onions 3 having thus had unnecessary surface skins peeled off and removed, roll down the plate 32 and are conveyed to the next treatment step.

The surface skins which have been blown or peeled off are collected in the waste box below the rollers 19 and can be discharged from the discharge port by pushing the sliding member 62 in the direction of the arrow F.

Thus, after the conveying speed of the belt 10 in the horizontal conveying part 6, the conveying speed (by the pawls 16A fitted through the lateral bars 16 to the roller chains 14) in the vertical conveying part 7, the speed of rotation of the rollers 19 in the peeling part 5 and the conveying speed of the pawls 28 fitted by way of the lateral bars 27 to the roller chains 26, are set at optimum values in dependence upon the sizes of the onions 3, when the onions 3 are put into the hopper 2, the peeled onions 3 will automatically come out of the outlet.

The conveying means of the present invention includes not only the horizontal and vertical parts of the conveying section 4 but also the conveying means in the peeling part 5. In the above described embodiment, the conveying section 4 is so formed as to convey them in horizontal and vertical directions but, needless to say, the invention is not limited to this arrangement. For example, the onions may be conveyed along a sloping path.

Moreover, the jet-directing part 31 in the peeling section 5 is not limited to the use of air nozzles 30 provided in three places in each of two rows in the forward and rearward direction as in the above described embodiment. The reciprocating direction of the air nozzles can also be different from that of the above described embodiment. For example, even if a plurality of air nozzles 30 are arranged in the rightward and leftward direction and are reciprocated in the forward and rearward direction, they can be made to function in substantially the same way. They can also be reciprocated in a direction inclined to the forward and rearward direction.

When a plurality of air nozzles are arranged along the rightward and leftward direction, even if they are not reciprocated, the surface skins can readily be peeled off.

Moreover, even if the blades 22 of the rotary saws 23 are fitted so as to be inclined instead of being vertical to the shaft 37 and are made to spirally incise the surface skins of the onions 3, the onions 3 can still be readily peeled.

The outer peripheral surfaces around the blades 23 of the holding members carrying the blades 22 of the rotary saws 23 are so formed as to be rotated by the friction acting on the parts in contact with the outer peripheries of the onions 3. However, in order to make them easy to rotate and drive, the outer peripheral surfaces around the blades 22 may be roughened or may be provided with such concave-convex patterns as are found on the outer peripheries of tyres.

The above described embodiment has been specifically described as applied to onions 3, but it can equally be applied to other bulbs such as garlic.

As described above, in accordance with the present invention, incisions to make the surface skins easy to peel off are made on the outer peripheral surfaces of the conveyed bulbs. Therefore, when the surface skins are to be peeled off by air jets, the surface skins can be peeled off positively within a short time irrespective of the directions of the bulbs. When a large volume of surface skins has to be peeled off, the present invention is very effective.

It is apparent that different modes of operation varying over a wide range can be used without deviating from the spirit and scope of the present invention. The present invention is not limited to any specific operating mode and is only limited by the appended Claims.

## CLAIMS

1.   A bulb peeling apparatus for peeling off the surface skins of bulbs by the action of jets of compressed air, characterised by comprising means (4, 19, 26) for conveying the bulbs at a speed which can be variably set, means (23) for forming incised grooves in the outer peripheries of the bulbs while contacting and rotating the bulbs in the course of their conveyance by said conveying means and means (5, 30) for peeling off the surface skins of the bulbs by directing jets of air onto the bulbs which have had the incised grooves formed in the outer peripheries.

2.   A bulb peeling apparatus according to Claim 1, characterised in that said means of forming incised grooves on the outer peripheries of the bulbs comprises disc-shaped rotary saws (23) provided with blades (22) extending from the outer peripheries thereof.

3.   A bulb peeling apparatus according to Claim 1 or Claim 2, characterised in that said means for peeling off surface skins by means of air jets is so formed as to be capable of being set at varying distances from the bulbs.

4.   A bulb peeling apparatus according to any one of Claims 1 to 3, characterised in that said conveying means comprises rollers (19) conveying the contacting bulbs whilst causing them to rotate about an axis connecting the root and stem of the bulb.

5.   A bulb peeling apparatus according to Claim 2 or either of Claims 3 or 4 as dependent thereon, characterised in that said rotary saws (23) are so formed that a plurality of rotary saws (23) may be fitted on one mounting plate (21) to which rotary saws having different projecting blade tips (22) can be removably fitted and that different rotary saws can be used by rotating the mounting plate.

6.  A bulb peeling apparatus according to Claim 3 or either of Claims 4 or 5 as dependent thereon, characterised in that said means of peeling off surface skins by air jets is adapted to be reciprocated.

# FIG.1

0109987

# FIG.2

2/5

0109987

0109987

/5

**FIG.3**

**FIG.4**

# FIG.5

# FIG.6

60

56C

55

56B

61

56A

54

57

59

30

58

51

52

53

European Patent
Office

**EUROPEAN SEARCH REPORT**

0109987

Application number

EP 82 30 6253

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-1 170 876 (TRIPAX ENGINEERING COMPANY PROPRIETARY LTD.) <br> * Page 3, line 72 - page 4, line 111; figures 2,7,11-14 * | 1-3,6 | A 23 N 15/08 |
| X | US-A-3 696 848 (E.P. MELLON et al.) <br> * Column 6, line 30 - column 7, line 65; figures 7-12 * | 1-3 | |
| X | EP-A-0 033 180 (G.J. RAATZ) <br> * Page 3, line 21 - page 5, line 32; figure * | 1 | |
| X | FR-A-2 481 890 (BACKUS SORMAC BV) <br> * Page 8, line 30 - page 9, line 29; figure 2 * | 1,4 | TECHNICAL FIELDS SEARCHED (Int. Cl. ³) |
| A | FR-A-2 200 775 (M.P. VOGELAAR) | | A 23 N |

--- 

The present search report has been drawn up for all claims

| Place of search THE HAGUE | Date of completion of the search 04-07-1983 | Examiner NEHRDICH H.J |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82